# EUROPÄISCHE PATENTSCHRIFT

(11) **EP 0 547 421 B1**
(45) Veröffentlichungstag und Bekanntmachung des Hinweises auf die Patenterteilung: **21.08.1996**
(21) Anmeldenummer: 92120451.7
(22) Anmeldetag: 01.12.1992
(51) Int. Cl.: B25J 9/08, B25J 9/12, B25J 19/00, H02K 11/00, B63H 23/24, B60K 1/02, B60K 7/00, F03D 11/00, B64D 47/00

(54) **Modularer Roboter**
Multiblock-Robot
Robot modulaire

(30) Priorität: 14.12.1991 DE 4141241
(43) Veröffentlichungstag der Anmeldung: 23.06.1993
(73) Patentinhaber: Kochanneck, Uwe, D-44145 Dortmund (DE)
(72) Erfinder: Kochanneck, Uwe, D-44145 Dortmund (DE)

(56) Entgegenhaltungen:
- EP-A- 0 233 712
- WO-A-87/05554
- DE-A- 3 704 951
- FR-A- 2 599 290
- GB-A- 2 053 148
- GB-A- 2 143 205
- US-A- 4 678 952

## Beschreibung

Die Erfindung betrifft ein Robotsystem mit robot-spezifischen Wirkungsweisen. Ein derartiges Robotsystem ist aus EP-A-477725 (Stand der Technik gemäß Artikel 54(3) EPÜ) bekannt. Diese Anordnung erbringt den Vorteil, daß Robots mit minimalem Aufwand in Entwicklung und Konstruktion für spezielle Aufgaben erstellt werden können und mit wenigen Handgriffen, von den Anwendern selbst für ein anderes Wirkungsspektrum umgebaut werden können.

Aufgabe der vorliegenden Erfindung ist es, die Vorteile dieses flexiblen Multiachsen-Robotsystems durch Einführung einer geringen Anzahl neuer Einbauelemente, in der Funktion der Anwendungsflexibilität und der Anwendungsbreite noch zu erweitern und die Baumaße dabei noch zu reduzieren. Dies ist gemäß der in Patentanspruch 1 definierten Erfindung dadurch erreicht, daß zusätzlich zu den Robot-Block-Normteilen mit Antriebsmotoren die seitlich an den Außenwandungen der Strom- und Informationskanäle befestigt werden, Robot-Block-Normteile mit Strom- und Informationskanälen eingesetzt werden, die selbst als Antriebsmotorkern ausgebildet sind und von Innenwicklungen umschlossen werden, die über den motorisch notwendigen Luftspalt von Außenwicklungen umschlossen sind die von einem Gehäuse umgeben werden, das mit Kugellagern an den Strom- und Informationskanälen drehbar gelagert ist und mit dem Zwischenring am Blockgehäuse befestigt ist und die Außenwicklungen und die Innenwicklungen, sowohl als Rotorwicklung als auch als Statorwicklung dient und dadurch entweder die Drehflansch-Steckverbindungen mit Strom- und Informationskanal angetrieben werden oder aber das Blockgehäuse und daß die Außenwicklungen und die Innenwicklungen bei Stromversorgung durch den Strom- und Informationskanal eine Antriebskraft auf die Drehflansch-Steckverbindungen oder die Blockgehäuse ausüben die mit Endgliedern, bestehend aus Werkzeugen, Rädern und Rotorblättern ausgeführt werden und für Multiachsen-Bewegungsabläufe bei Robotern, Werkzeugmaschinen, Ventilatoren, Turbinen und Elektrofahrzeugen eingesetzt werden und bei Fremdantrieb der Endglieder durch Windkräfte, Bremswirkungen von Rädern, Ventilatoren, Turbinen, Rotorblättern, Werkzeugen, die Außenwicklungen und die Innenwicklungen als Generator wirksam werden und Strom in die Strom- und Kommunikationskanäle eingespeist wird.

Hiermit ist gegenüber dem Stand der Technik erreicht, daß die Vielfalt und Funktion der erstellten Baugruppen der Multiblock-Robots durch minimale Bauteilergänzung und Bauteilplazierungsvarianten des gesamten Multiblock-Robotbausatzes noch gesteigert wird und die Kombination untereinander weiter gefördert wird, wobei die Vielfalt der Anwendungsmöglichkeiten und Aufbauformen noch erweitert wird und auf unterschiedlichste Fachbereiche anwendbar wird. Gleichzeitig wird die Bauweise verkleinert und die Anwendung auch auf Kleinstroboter und Sektoren ausgedehnt in denen die Baugröße von Multiachsen-Bewegungskonzeptionen eine Rolle spielt.

Ausgestaltungen der Erfindung sind in den Unteransprüchen genannt.

Die Erfindung wird im folgenden anhand von Ausführungsbeispielen mit Bezug auf die Zeichnung näher erläutert. In dieser zeigt
Fig. 1 einen Multiblock mit Drehflansch-Steckverbindungen in Schnittdarstellung mit Befestigung des Gehäuses der Außenwicklungen am Multiblock-Gehäuse,
Fig. 2 einen Multiblock mit Drehflansch-Steckverbindungen in Schnittdarstellung ohne Befestigung des Gehäuses der Außenwicklungen und mit Getrieberitzel-Verbindung zum Zahnkranz-Innenring der Drehflansch-Steckverbindungen,
Fig. 3 einen Multiblock mit Drehflansch-Steckverbindungen in Schnittdarstellung mit Befestigung des Gehäuses der Außenwicklungen am Multiblock-Gehäuse,

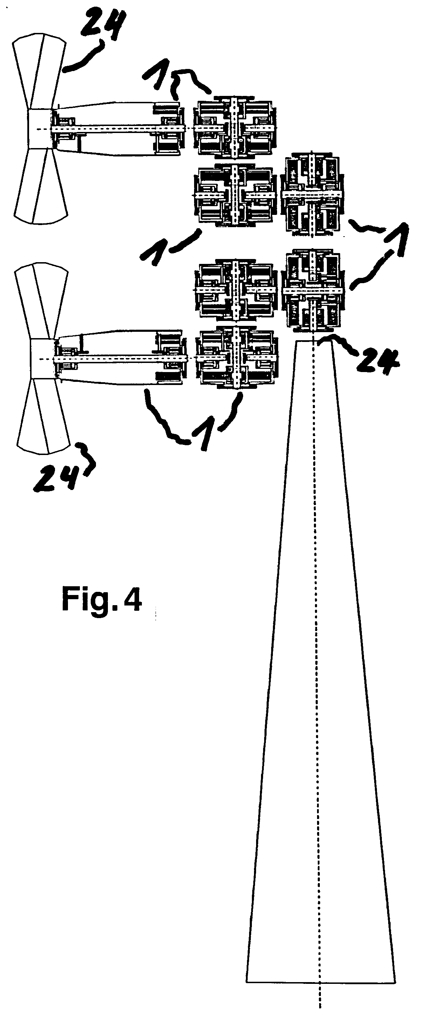

Fig. 4 eine Kombination von Multiblocks gemäß der Fig. 3 und Multiblocks gemäß der Fig. 1 mit einem Endglied, das als Rotorblatt ausgeführt ist,
Fig. 5 eine Kombination von Multiblocks gemäß der Fig. 3 zusammen mit einem Multiblock gemäß der Fig. 1 mit einem Endglied, das als Greifeinrichtung ausgeführt ist,

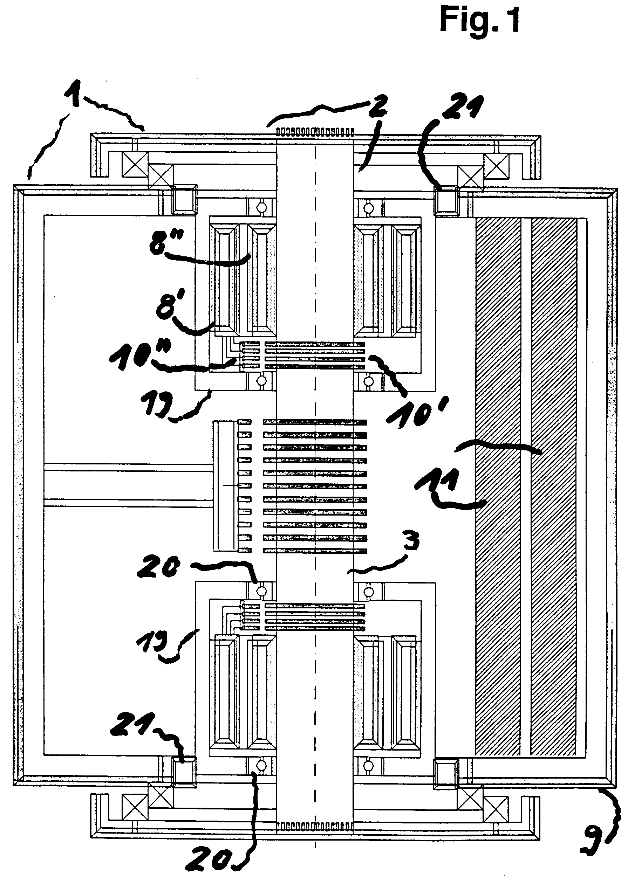

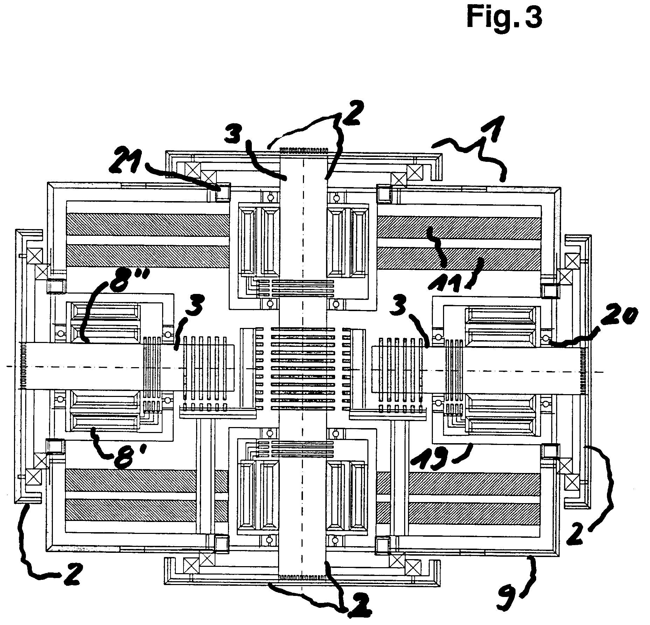

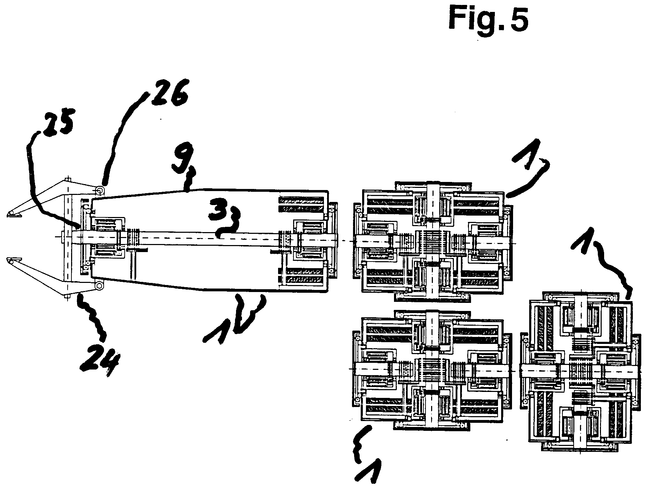

Fig. 5 eine Kombination von Multiblocks gemäß der Fig. 3 und Multiblocks gemäß der Fig. 1 mit je einem Endglied, das als Rotorblatt ausgeführt ist,

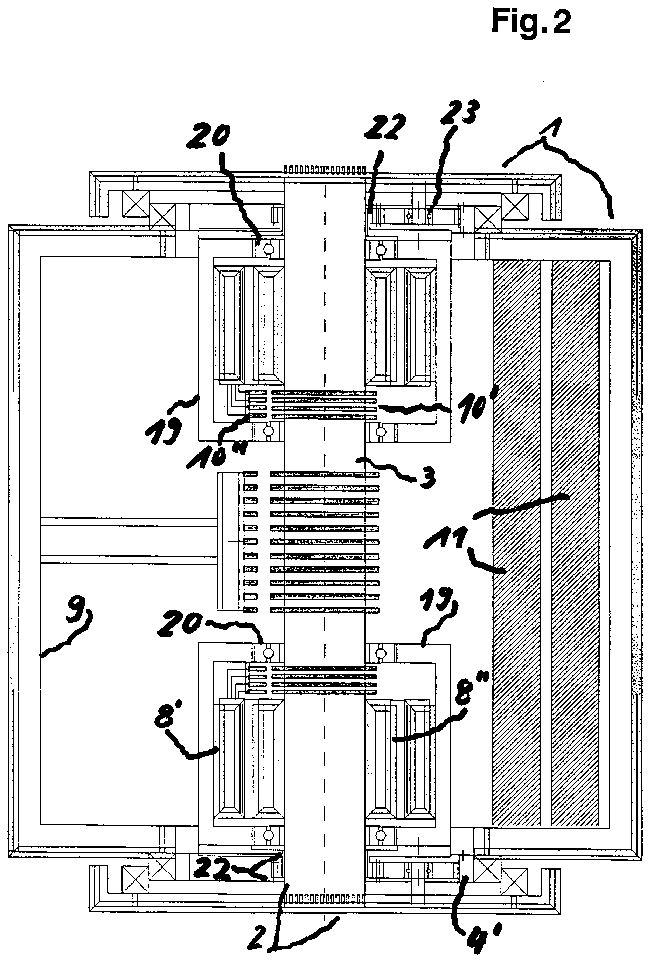

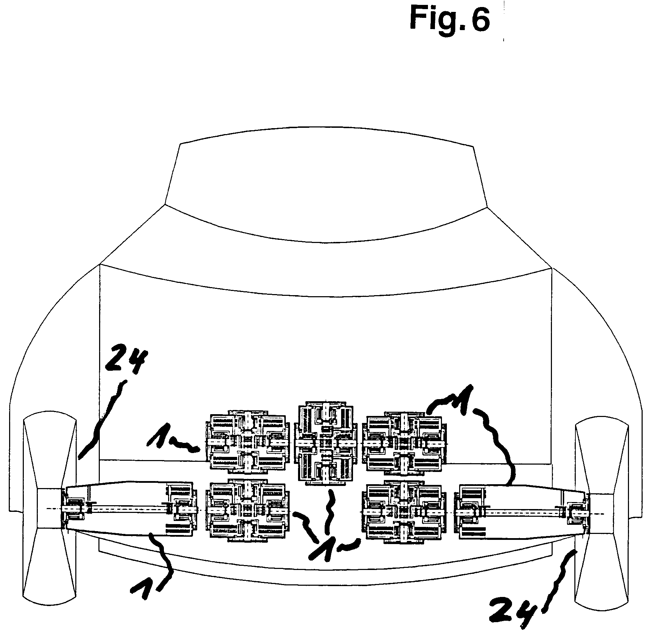

Fig. 6 eine Kombination von Multiblocks gemäß der Fig. 1,2,3 mit je einem Endglied, das als Fahrzeugrad ausgeführt ist,

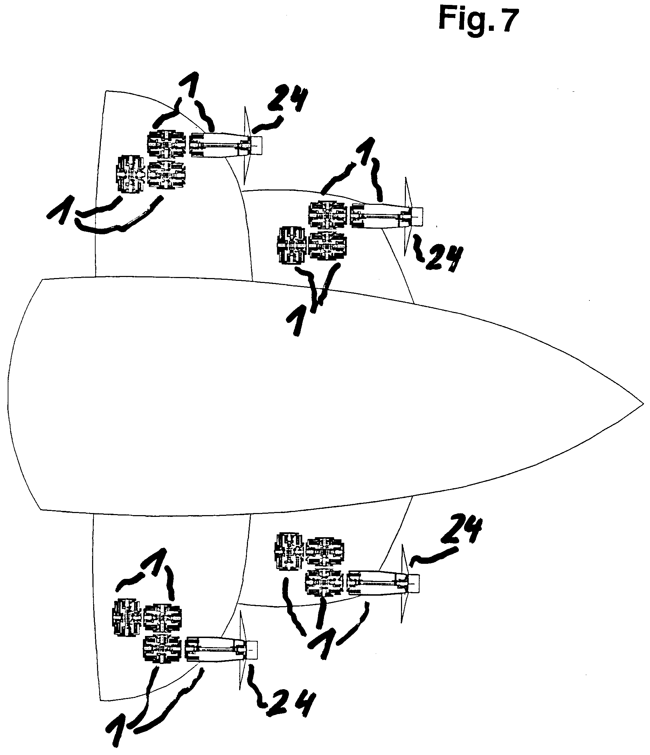

Fig. 7 eine Kombination von Multiblocks gemäß der Fig. 1,2,3 mit je einem Endglied, das als Propellerrad ausgebildet ist.

### Fig. 1

Auf die Außenwandung des mittigen Strom- und Informationskanals 3 ist jeweils im Steckverbindungsbereich eine Innenwicklung 8'' fest aufgesetzt, die von einer Außenwicklung 8' umschlossen wird und über den motorisch notwendigen Lufstpalt von der Innenwicklung 8' getrennt ist. Die Außenwicklung 8' ist von einem Gehäuse 19 umgeben, das an Kugellagern 20 drehbar befestigt ist, die auf den Außenwandungen des Strom- und Informationskanals 3 fest aufsitzen. Innerhalb des Gehäuses 19 sind auf den Außenwandungen des Strom- und Informationskanals 3 ist ein innerer Schleifring- und Induktivkörper 10' aufgesetzt der durch einen Luftspalt von dem äußeren Schleifring und Induktivkörpern 10'' getrennt ist, der mit einem Schleifring und Induktivkörper-Halter am Gehäuse 19 befestigt ist. Sowohl die Innenwicklung 8'' als auch die Außenwicklung 8' haben somit Anschluß an die Strom- und Versorgungsleitungen und die Kommunikations- und Steuerleitungen des Strom- und Informationskanals 3. Es wird je nach Elektro-Motorprinzip Anwendung, die Innenwicklung 8'' und die Außenwicklung 8' über den Strom- und Informationskanal 3 und den inneren Schleifring- und Induktivkörper 10' und den äußeren Schleifring- und Induktivkörper 10'' mit Strom versorgt und Drehfelder in den Innen- und Außenwicklungen erzeugt. Hierbei kann die Innenwicklung 8'' mit der gesamten Drehflansch-Steckverbindung 2 als Rotor wirksam werden und die Außenwicklung 8' mit dem zugehörigen Gehäuse 19 und dem gesamten Multiblock-Gehäuse 9 mit der festen Verbindung über den Zwischenring 21 als Stator, oder umgekehrt die Drehflansch-Steckverbindung 2 als Stator und das Multiblock-Gehäuse 9 als Rotor, gemäß der Wirkung eines Innenläufer- und eines Außenläufer-Elektromotors. Gleichzeitig kann nach dem Generator-Prinzip über eine Dreh-Krafteinwirkung von außen auf die Drehflansch-Steckverbindung 2, oder das Multiblockgehäuse 9, ein Strom in den Außen- und Innenwicklungen 8',8'' erzeugt werden, der nun über die äußeren und inneren Schleifring- und Induktivkörper 10'',10' von außen in die Strom- und Kommunikationskanäle eingeleitet wird. Durch die zentrische Anordnung der Außen- und Innenwicklungen (8',8'') rund um die Strom- und Kommunikationskanäle, als direkter Bestandteil der Drehflansch-Steckverbindung 2 wird das gesamte Robot-Block-Normteil 1 noch kompakter und kleiner in den Außenmaßen. Gleichzeitig wird es als Multiachsen-Bauteil generell für Antriebs-als auch für Generatorzwecke eingesetzt.

### Fig. 2

Das Gehäuse 19 der Außenwicklung 8' ist hier nicht mit einem Zwischenring 20 direkt mit dem Multiblock-Gehäuse 9 verbunden. Stattdessen wird zentrisch und mit einem Luftspalt zum Strom- und Kommunikationskanal 3 ein Hohlritzel 22 auf das Gehäuse 19 aufgesetzt, so daß sowohl die Drehflansch-Steckverbindung 3 und das Gehäuse 19 gegeneinander frei drehbar bleiben. Das Hohlritzel 22 greift in ein Zwischenzahnrad 23 ein, das außerden in den Zahnkranz-Innenring 4' der Drehverbindungen 4 eingreift. Dadurch wird ein Untersetzungsverhältnis zwischen der Umdrehungsgeschwindigkeit des Gehäuses 19 und dem gesamten Blockgehäuse 9 erreicht.

### Fig. 3

Jede Außen-Innenwicklung 8',8'' des Multiblock-Normteils 1 kann als Antriebs- oder Generatoreinheit ausgebildet werden, so daß entweder horizontale oder vertikale Drehungen der Drehflansch-Steckverbindungen 2 und des Multiblock-Gehäuses 9 durch Stromeinspeisung von den Strom- und Informationskanalen 3 erreicht werden, oder aber Strom in die Strom- und Kommunikationskanäle 3 eingespeist wird, der über Fremddrehung von außen an den Drehflansch-Steckverbindungen einwirkt.

### Fig. 4

Mehrere Multiblock-Normteile 1 werden so zu einem Windkraftwerk kombiniert, das horizontale und vertikale Drehungen über die Multiachsen-Bewegungen der Multiblock-Normteile 1 mit Drehflansch-Steckverbindungen 2 ausgeführt werden können. Die Endglieder 24, bestehend aus Wind-Flügelrädern, werden mit festem Anschlußflansch, in Kompatibilität zu dem Anschlußflansch der Drehflansch-Steckverbindungen 2, direkt auf das Multiblock-Normteil 1 aufgesteckt. Die Windkraft bringt die Endglieder 24 in Drehung und die Drehkraft wird über die Außenwicklungen und Innenwicklungen 8',8'' nach dem Generatorprinzip in Strom umgewandelt, der in die Strom- und Kommunikationskanäle eingespeist wird. Der Stützmast selbst wird als Endglied 24, ebenfalls mit einer Multiblock-Normteil 1 kompatiblen Drehflansch-Steckverbindung 2 ausgeführt und ein Strom und Kommunikationskanal 2 bis zum Boden und bis zu einem Netzverteiler in Bodenhöhe geführt. Mit der Ausführung der Außenwicklungen und Innenwicklungen 8',8'' sowohl als Generator als auch als Antriebseinheit , werden mit dem eingespeisten Strom einige Außenwicklungen und Innenwicklungen 8',8'' in den Multiblock-Normteilen 1 als Stromverbraucher zu Antrieben und stellen je nach Windrichtung entsprechend dem günstigsten Einfallwinkel der Windkraft horizontal und vertikal kontinuierlich neu ein und drehen der Windrichtung neu zu und schalten außerdem je nach Windkraft, innerhalb der Multiblock-Normteile 1 einige oder alle Außenwicklungen 8' und Innenwicklungen 8'' als Generatoren und Stromerzeuger neu zu. Die Endglieder 24 werden dementsprechend mit Sensoren zur Erfassung der Windrichtung und Windkraft ausgerüstet, deren Meßwerte mit den Elektronik-Einbauelementen 11innerhalb der Multiblock-Normteile 1 steuerungstechnisch ausgewertet werden. Durch die Multiachsendrehung und die Zu- oder Abschaltung von Generatoren je nach Windkraft wird der Wirkungsgrad derartiger Windkraftwerke entscheidend verbessert.

### Fig. 5

Mehrere Multiblock-Normteile 1 bilden einen Roboter-Multiachsen-Schwenkarm mit einem Endglied 24, das als Greifeinrichtung ausgeführt ist. Der Greifmechanismus des Endgliedes 24 wird hier direkt von einem Antriebsritzel 25 angetrieben das auf den festen, aufsteck-kompatiblen Anschlußflansch zur Drehflansch-Steckverbindung 2 des Multiblock-Normteiles 1 aufgesteckt ist. Damit die Verstellung der Greiffinger allein durch die Drehbewegungen der Drehflansch-Steckverbindung 2 über das Antriebsritzel 25 erfolgen kann, stützt sich der Greifmechanismus hier in Drehgelenken 26 ab, die auf das Multiblock-Gehäuse 9 aufgesteckt sind. Die Multiblock-Normteile 1 mit Getriebeeinsatz wie das Getrieberitzel 22 und 23, mit Überleitung von untersetzten Umdrehungszahlen von den Außen- und Innenwicklungen 8',8'' innerhalb der Multiblock-Normteile 1 zu den Endgliedern 24 werden insbesondere für Anwendungen eingesetzt in denen niedrige Umfangsgeschwindigkeiten der Endglieder 24 erforderlich sind.

### Fig. 6

Mehrere Multiblock-Normteil 1 bilden das Chassis eines Elektrofahrzeuges. Die Endglieder 24 mit ihrem festen, kompatiblen Anschlußflansch zu den Drehflansch-Steckverbindungen 2 der Multiblock-Normteile 1, sind hier als Fahrzeugräder ausgeführt. Die Antriebs- und Bremsbewegungen erfolgen über die Antriebs-Schaltung von Außenwicklungen und Innenwicklungen 8',8'', in den Multiblock-Normteilen 1. Die Bremsenergie des Elektrofahrzeuges wird über die Generator-Schaltung von Außenwicklungen und Innenwicklungen 8',8'' in den Multiblock-Normteilen in Strom umgewandelt und zu Multiblock-Normteilen 1 geführt, die mit Einbauelementen 11 in Form von Akku-Zellen ausgerüstet sind. Jedes Fahrzeugrad ist dementspreched einzeln angetrieben und gibt auch einzeln Bremsenergie an die Einbauelemente 11 ab. Die Lenkung des Elektrofahrzeuges erfolgt in Betrachtung der Vorderachse und Hinterachse, jeweils zwischen den beiden Drehflansch-Steckverbindungen 2 der vertikal übereinander angeordneten Multiblock-Normteile 1, die links und rechts zu dem mittig angeordneten Multiblock-Normteil 1 eingesetzt sind. So ist die Lenkung jedes Rades individuell und einzeln möglich.

### Fig. 7

Die multiachsen Bewegungen mehrerer Multiblock-Normteile 1 in Kombination mit Endgliedern 24, die hier als Vortiebspropeller ausgeführt sind, werden zur Verstellung des Anstellwinkels und gleichzeitigen Erzeugung der Vortriebskraft eingesetzt. Bei Flugbooten werden die Propeller zur Manöverierung als Ersatz einer Rudermaschine mit gleichzeitiger Vortriebs-Schraubenkraft eingesetzt. Sie werden über die Drehflanschsteckverbindungen zwischen jedem Multiblock-Normteil in das Fahrwasser eingeschwenkt, eingetaucht gefahren und auch aus dem Wasser geschwenkt als Luftschraube wirksam. Bei Flugkörpern werden die Endglieder 24 als ebenfalls als Vortriebspropeller ausgeführt und gleichzeitig zur Verstellung des Anstellwinkels mit Erzeugung der Vortriebskraft eingesetzt. In dieser Art werden die Endglieder beim Start vertikal eingeschwenkt und übernehmen die Auftriebskraft in der Wirkungsweise eines Hubschraubers. Bei Erreichung ausreichender Höhe werden die Multiblock-Normteile 1 über die Drehflansch-Steckverbindungen 2 horizontal geschwenkt und übernehmen die Vortriebskraft. Die Multiblock-Normteile ohne Getrebeeinsatz wie der Getrieberitzel 22 und 23, sondern mit Zwischenring (21) ausgerüstet, mit der direkten Überleitung von hohen Umdrehungszahlen in den Außen- und Innenwicklungen 8',8'' innerhalb der Multiblock-Normteile 1, werden insbesondere für Anwendungen eingesetzt in denen hohe Umfangsgeschwindigkeiten der Endglieder 24 erforderlich sind. Als Endglieder 24 werden jedoch auch Turbinenlaufwerke eingesetzt, die mit festen, kompatiblen Anschlußflanschen zu den Drehflansch-Steckverbindungen 2 der Multiblock-Normteile ausgerüstet sind. In diesem Fall werden die Multiachsen-Bewegungen der Multiblock-Normteile nur für den Verstellung der Anstellwinkel eingesetzt und der Vortrieb erfolgt über die Turbinenlaufwerke.

Multiblock-Normteile 1 mit Außen- und Innenwicklungen 8',8'' mit unterschiedlichen Endgliedern 24 werden außerdem in all den Fachbereichen eingesetzt in denen eine Multiachsen-Bewegung mit motorischer und generatorischer Wirkungsweise erforderlich ist.

## Patentansprüche

1. Robotsystem mit robot-spezifischen Wirkungsweisen, wobei aus annähernd baugleichen Robot-Block-Normteilen (1) Multiblock-Robots mit selbstoperierenden Geh- Fahr- und Manipulationseigenschaften montiert werden, die mit zueinanderpaßenden, horizontalen- und vertikale flansch-Steckverbindungen (2) ausgeführt werden, wobei jede Drehflansch-Steckverbindung mit Einraststeckern und federbelasteten Einrastklemmhebel ausgerüstet ist und eine Drehverbindung mit Antriebsmotoren erhält und mittig durch die Drehflansch-Steckverbindungen ein Strom- und Kommunikationskanal (3) hindurchführt der Strom- und Versorgungsleitungen und Kommunikations- und Steuerleitungen aufnimmt die zu inneren- und äußeren Schleifring- und Induktivkörpern (10) und zu weiteren Drehflansch-Steckverbindungen, zu den Antriebsmotoren und je nach Anwendungs-Zielsetzungen, zu Einbauelementen, bestehend aus Akkumulatoren, aus Sensoren, aus Elektronikplatinen, im Inneren der Blockgehäuse führen, wobei die Strom- und Versorgungsleitungen an den Enden des Strom-und lnformationskanals in Steckereinheiten mit Steckkontakten und in Steckerbuchsen-Einheit mit Steckerbuchsen geführt werden wobei die Drehflansch-Steckverbindungen mit dem mittigen Strom- und Kommunikationskanal über die Drehverbindungen und die Antriebsmotoren um die eigene Mittelachse gedreht und angetrieben werden und das Blockgehäuse still steht, wobei die Drehflansch-Steckverbindungen mit dem Strom- und Kommunikationskanal still steht und nur das Blockgehäuse rotiert, wobei die Drehflansch-Steckverbindung mit dem Strom- und Kommunikationskanal und das Blockgehäuse gemeinsam, über das Robot-Block-Normteil einer Nachbar-Drehflansch-Steckverbindung angetrieben werden, oder aber nur die Drehflansch-Steckverbindung mit dem Strom- und Informationsleitungskanal durch eine Nachbar-Drehflansch-Steckverbindung angetrieben wird und dabei das Blockgehäuse still steht, und wobei durch die Drehflansch-zu Drehflansch-Steckverbindungen ein zusammengesteckter Multiblock-Robotaufbau über die Zentrierung durch die Einraststecker, die Klemmwirkung der federbelasteten Einrastklemmhebel, den Kontaktschluß der Steckereinheiten und der Steckerbuchsen-Einheit zueinander und der Robot-Block-Normteile untereinander erreicht wird, der über die Drehverbindungen und die Antriebsmotoren, durch reine Drehkraftübertragungen, je nach Zusammenstecken von Robot-Block-Normteilen mit unterschiedlichen Anwendungs-Zielsetzungen, variierbare Manipulations- und Fortbewegungen in mehrachsigen Bewegungsfreiheitsgraden durchgeführt werden, wobei zusätzlich zu den Robot-Block-Normteilen (1) mit Antriebsmotoren die seitlich an den Außenwandungen der Strom- und Informationskanäle (3) befestigt werden, Robot-Block-Normteile (1) mit Strom- und Informationskanälen (3) eingesetzt werden, die selbst als Antriebsmotorkern ausgebildet sind und von Innenwicklungen (8'') umschlossen werden, die über den motorisch notwendigen Luftspalt von Außenwicklungen (8') umschlossen sind die von einem Gehäuse (19) umgeben werden, das mit Kugellagern (20) an den Strom- und Informationskanälen (3) drehbar gelagert ist und mit dem Zwischenring (21) am Blockgehäuse (9) befestigt ist und die Außenwicklungen (8') und die Innenwicklungen (8''), sowohl als Rotorwicklung als auch als Statorwicklung dient und dadurch entweder die Drehflansch-Steckverbindungen (2) mit Strom- und Informationskanal (3) angetrieben werden oder aber das Blockgehäuse (9) und daß die Außenwicklungen (8') und die Innenwicklungen (8'') bei Stromversorgung durch den Strom- und Informationskanal 3 eine Antriebskraft auf die DrehflanschSteckverbindungen (2) oder die Blockgehäuse (9) ausüben die mit Endgliedern (24), bestehend aus Werkzeugen, Rädern und Rotorblättern ausgeführt werden und für Multiachsen-Bewegungsabläufe bei Robotern, Werkzeugmaschinen, Ventilatoren, Turbinen und Elektrofahrzeugen eingesetzt werden und bei Fremdantrieb der Endglieder (24) durch Windkräfte, Bremswirkungen von Rädern, Ventilatoren, Turbinen, Rotorblättern, Werkzeugen, die Außenwicklungen (8') und die Innenwicklungen (8'') als Generator wirksam werden und Strom in die Strom- und Kommunikationskanäle (3) eingespeist wird.

2. Robotsystem nach Anspruch 1 dadurch gekennzeichnet, daß an dem Gehäuse (19) an der Seite der Außenwicklungen (8') die zu den Drehflansch-Steckverbindungen (2) gerichtet ist, ein Hohlritzel (22) befestigt ist, das den Strom- und Informationskanal (3) berührungslos umschließt und in ein Zwischenritzel (23) mit Kraftschluß zum Zahnkranz des Drehverbindungs-Innenrings (4') eingreift und über dieses Zwischengetriebe der Antrieb erfolgt.

3. Robotsystem nach Anspruch 1 oder 2 dadurch gekennzeichnet, daß auf einem Strom- und Informationskanal (3) unterschiedliche Antriebsarten mit seitlich angeordneten Antriebsmotoren und mit mittig zur Drehachse der Robot-Block-Normteile (1) aufsitzenden Außen- und Innenwicklungen (8',8'') hintereinander angeordnet werden und innerhalb eines Robot-Block-Normteiles (1) Drehflansch-Steckverbindungen (2) mit Strom- und Informationskanal (3), mit unterschiedlichen Antriebsarten nebeneinander und zueinander gegenüberliegend eingesetzt werden.

## Claims

1. A Robotsystem with robot-specific effects, whereat out of various standard robot-block-parts (1) of nearly the same design, multiblock-robots are mounted with self operating walk, drive and manipulating faculties with horizontally and vertically dimension-fitting rotation-flange plug connections (2), whereat every rotation-flange plug connection (2) is provided with engaging plugs and engaging spring-loaded clamp levers and having a turntable with driving motor and with current and communication channels (3) for current, supply, control and communcation conducters in the center line, guiding to inner and outer slip-ring and induction units (10) and to further rotation-flange plug connections (2), to driving motors and in accordance with the user intention, to built-in equipment, composed of accumulators, sensors, electronic boards within the block chambers (9), whereat the current and supply lines are guided to plug units with plug connections and plug sleeves provided at the end of every current and communication channel (3), whereat the rotation-flange plug connection (2) with center line current and communication channel (3) is rotated around the own center axis by means of the driving motors whereas the block chamber (9) itself is not rotated, whereat the rotation-flange plug connection (2) with the current and communication channel (3) is not rotated and only the block chamber (9) is rotated, whereat the rotation-flange plug connection (2) with the current and communication channel (3) together with the block chamber (9) is rotated by means of the rotation-flange plug connection (2) of an adjacent standard robot-block-part (1), or only the rotation-flange plug connection (2) with current and communication channel (3) is rotated by means of the rotation-flange plug connection (2) of an adjacent standard robot-block-part (1) and the block chamber (9) itself is not rotated, and whereat from one rotation-flange plug connection (2) to the next rotation-flange plug connection (2), a multi-block robot assembly is put together by means of the centering effect of the engaging plugs, the clamping effect of the spring-loaded clamp levers, the contact closing between the plug connection units and the plug sleeve units of one standard robot-block-part (1) with the other and where only by rotary power, variable manipulations and locomotions with multi-axis free-motion efficiency can be provided, by means of the turntables and the driving motors, in accordance with the assembled standard robot-block-parts (1) put together for the most different user application purposes, whereat, in addition to the standard robot-block-parts (1) with driving motors, which are laterally attatched to the outer walls of the current and comunication channels (3) of the standard robot-block-parts (1), further standard robot-block-parts (1) are provided with current and communication channels (3) which are directly the core of a driving motor, with current and communication channels (3), receiving inner windings (8''), separated from outer windings (8') by the electromotive needed air gap distance and, the outer windings (8') being attatched to a casing (19) which is freely rotatable relative to the current and communication channels (3) by means of roller bearings (20) and rigidly fixed at the block chamber (9) by an intermediate ring (21), and the outer windings (8') and inner windigs (8'') alternatively being applicable as rotor windings or stator windings and by that, either driving the rotation-flange plug connections (2) with current and communication channels (3), or the block chamber (9) and, that by a current supply from the current and communication channel (3), a driving power is generated within the outer windings (8') and the inner windings (8''), leading to the rotation-flange plug connections (2) or to the block chambers (9) which receive end-members (24) consisting of tools, wheels, rotor blades, applicable for multi-axis movements of robots, machine tools, ventilators, turbines and electro cars and, that by an outside driving power, efficient at the end-members (24), generated by wind power, the braking effect of wheels, ventilators, turbines, rotor blades, tools, the outside windings (8') and inside windings (8'') are applicable as generator, delivering current to the current and communication channels (3).

2. The robotsystem defined by claim 1, characterized in that a hollow pinion (22) is fastened at the casing (19), where the outside windings (8') directed to the rotation-flange plug connections (2) are positioned, there surrounding the current and communication channel (3) without material contact and engaging to a gears rim of an intermediate pinion (23) and this having a non-positive connection with the gears rim of the turntable inside ring (4'), achieving by this intermediate gears the driving transmission.

3. The robotsystem defined by claim 1 or 2, characterized in that at one current and communication channel (3), different driving types are provided, with laterally positioned driving motors and, relative to the rotation axis of the standard robot-block-parts (1), with centrally positioned outside and inside windings (8',8''), disposed one behind the other and, within one standard robot-block-part (1), rotation-flange plug connections (2) with current and communication channel (3), with different driving types are provided, adjacently and in opposite position to each other.

## Revendications

1. Système de robot au fonctionnement spécifiquement robotique, dont des robots modulaires d'un caractère d'actionnement à pied et à roues et d'une faculté de manipulation auto-opérationnelle, sont montés par des pièces standardisées de bloc-robot (1) d'une forme de construction à peu près identique comportant des brides pivotantes à connexion enfichable (2) ajustées les unes par rapport aux autres, et dont chaque bride pivotante à connexion enfichable (2) est équipée avec des fiches d'encliquetage et des leviers inter-appui d'encliquetage commandées par ressort et avec des couronnes de pivotement à moteurs de commande, et dont à l'axe central, à travers la bride pivotante à connexion enfichable (2) est prévue une conduite de courant et de communication (3) qui comporte des conducteurs de courant et d'alimentation (10), ainsi que des conducteurs de communication et de commande qui sont conduits aux corps d' anneau collecteur et d'induction intérieurs et extérieurs (10',10'') et aux autres brides pivotantes à connexion enfichable (2), aux moteurs de commande (8) et dépendant du champ d'application, ils sont en outre conduits aux objets encastrés se composant des accumulateurs, des sensors, des platines éléctroniques à l'intérieur des blocs-boîtier (9), dont les conducteurs de courant et d'alimentation (10) comportes aux bouts des conduites de courant et de communication (3) des unités de fiche avec contacts à fiche, des unités d'alvéoles et contacts femelles, et dont les brides pivotantes à connexion enfichable (2) avec la conduite de courant et de communication centrale (3) sont pivotées et mouvées autour de l'axe propre par les couronnes de pivotement pendant que les moteurs de commande et le bloc-boîtier (9) sont immobiles, que les brides pivotantes à connexion enfichable (2) sont immobile et seulement le bloc-boitier (9) est pivoté, que les brides pivotantes à connexion enfichable (2) avec la conduite de courant et de communication (3) et le bloc-boîtier (9) ensemble sont mouvés par la pièce standardisée de bloc-robot (1) d'une bride pivotante à connexion enfichable (2) en voisinage, ou seulement la bride pivotante à connexion enfichable (2) avec la conduite de courant et de communication (3) est mouvé par la bride pivotante à connexion enfichable (2) en voisinage pendant que le bloc-boîtier (9) est immobile, dont les brides pivotantes à connexion enfichable (2), les unes montées par rapport aux autres, composent la structure d'un robot modulaire à connexion enfichée qui est realisée par le centrage des fiches d'encliquetage, le serrage des leviers inter-appui d'encliquetage commandées par ressort, l'exécution des contacts des unités de fiche des unités d'alvéoles les unes par rapport aux autres et mutuellement entre les pièces standardisées de bloc-robot (1), qui peut opérer seulement par la transmission de force de pivotement des couronnes de pivotement et des moteurs de commande, et qui peut exécuté, dépendant d'enfichage des pièces standardisées de bloc-robot (1) et des objectifs d'utilisation individuels, des manipulations et déplaçements variables d'une liberté de mouvement en multi-axis degrés, dont aditionellement aux pièces standardisées de bloc-robot (1) avec les moteurs de commande qui sont fixés latéralement sur les parois extérieures des conduites de courant et de communication (3), des pièces standardisées de bloc-robot (1) avec des conduites de courant et de communication (3) sont prévues, où ces conduites de courant et de communication (3) sont diréctement formés comme noyau des moteurs de commande et sont entournés des bobinages intérieurs (8'') qui sont entournés des bobinages extérieurs (8') et séparés par un entrefer électromotrice nécessaire et qui de leurs part sont enfermés d'un corps (19) qui est logé rotativement par des roulements à billes (20) latéralement sur les parois des conduites de courant et de communication (3) et fixé au bloc-boîtier (9) par la bague intermédiaire (21) et, les bobinages extérieurs (8') et les bobinages intérieurs (8'') sont appliqués comme bobinages de rotor mais aussi comme bobinages de stator et ils entraînent les brides pivotantes à connexion enfichable (2) et leurs conduites de courant et de communication (3) ou bien le blocboitier (9) et par l'alimentation en courant aux bobinages extérieurs (8') et aux bobinages intérieurs (8'') venant de la conduite de courant et de communication (3) est obtenu une force d'entraînement qui est efficace aux brides pivotantes à connexion enfichable (2) et leurs conduites de courant et de communication (3) ou bien au bloc-boitier (9) qui comportent des membres d'extrémité (24) composés des outils, des roues, des ailes à rotor et qui sont utilisés aux mouvements multiaxials pour des robots, des machines-outil, des ventilateurs, des turbines et des automobiles électriques et, par l'entraînement étrangèr aux membres d'extémité (24) par l'énergie éoliene, par l'action de freinage des roues, des ventilateurs, des turbines, des ailes à rotor, des outils, les bobinages extérieurs (8') et les bobinages intérieurs (8'') sont générateurs de courant et le courant géneré est alimenté aux conduites de courant et de communication (3).

2. Système de robot selon la revendication 1, caractérisé en ce que sur le corps (19), à la face des bobinages extérieurs (8') vers les brides pivotantes à connexion enfichable (2), est fixé une roue creux à denture (22), qui entoure sans contact de matière les conduites de courant et de communication (3) et engrene à une roue à denture intermédiaire (23) et ceci à la denture de la bague intérieure (4'), composant de cette manière une transmission intermédiaire, commandé par l'entraînement.

3. Système de robot selon la revendication 1 ou 2, caractérisé en ce que sur une conduites de courant et de communication (3) sont disposées les structures d'entraînement différentes les unes derrière les autres, avec les moteurs d'entraînement en face et avec les bobinages extérieurs (8') et les bobinages intérieurs (8''), centrique autour de l'axe de mouvement central de la pièce standardisée de bloc-robot (1) et, à l'intérieur de la pièce standardisée de bloc-robot (1) sont disposés les structures d'entraînement différentes des brides pivotantes à connexion enfichable (2) et leurs conduites de courant et de communication (3), juxtaposées et les unes opposées les autres.
